# EUROPEAN PATENT SPECIFICATION

(11) **EP 0 615 078 B1**
(45) Date of publication and mention of the grant of the patent: **15.10.1997**
(21) Application number: 94102311.1
(22) Date of filing: 16.02.1994
(51) Int. Cl.: F16H 59/10

(54) **A system for detecting the position of a manual control member, in particular a control lever for a servo assisted gearbox for a motor vehicle**
System zum Detektieren der Position eines Handschalthebels, insbesondere für Schalthebel eines hilfskraftbetätigten Schaltgetriebes für Kraftfahrzeuge
Système pour détecter la position d'une commande manuelle en particulier un sélecteur d'une bôite de vitesse à servocommande d'un véhicule automobile

(30) Priority: 09.03.1993 IT TO930161
(43) Date of publication of application: 14.09.1994
(73) Proprietor: MAGNETI MARELLI S.p.A., 20145 Milano (IT)
(72) Inventor: Sappe', Levi, I-10030 Villareggia (Torino) (IT)
(74) Representative: Quinterno, Giuseppe

(56) References cited:
- DE-A- 3 930 897
- FR-A- 2 658 965
- US-A- 4 373 619
- US-A- 4 747 056

## Description

The present invention relates to a system for detecting the position of a manual control member in particular a control lever for a servo-assisted gearbox for a motor vehicle.

A system for detecting the position of a manually operable control member which can assume a plurality of predefined discrete positions, particularly for detecting the position of the control lever of a servo-assisted gearbox for a motor vehicle, comprising
a supply and decoder unit having a plurality of terminals and a corresponding plurality of first circuit branches connected between a respective terminal of the unit and a first pole of a voltage source and including respective resistors; and
position signal generator means associated with the said control member and having a plurality of ordered outputs connected to the terminals of the said unit by respective connection conductors;
the arrangement being such that the voltages present in operation at the terminals of the said unit allow discrimination of the instantaneous position of the control member,
is known from US-A-4 373 619. In this prior art system the position generator means comprise nine outputs and the decoder unit comprises an expander which converts the voltages present at the nine terminals into a four bit code for the operation of the gearbox. No description is given on the structures of the position generator means which provide the signals indicative of the range selected through the manual control lever.

A system according to the invention is characterised in the features as claimed in claim 1; therein, the said position signal generator means include a plurality of second circuit branches each of which is connected between a respective output and the second pole of the said voltage source and include a switch the open/closed condition of which is controlled by the said control member; each position of the said control member corresponds to predetermined pairs of switches being simultaneously closed;
respective by-pass resistors are connected in parallel to the said switches; and
at least one further resistor is interposed between the said by-pass resistors and the second pole of the voltage source.

In a first embodiment a single further resistor is positioned between the by-pass resistors and the second pole of the voltage source.

In a variant embodiment respective further resistors having the same resistance are located between the by-pass resistors and the second pole of the voltage source.

Further characteristics and advantages of the invention will become apparent from the following detailed description provided purely by way of non-limitative example with reference to the attached drawings, in which:
Figure 1 is a circuit diagram of a first embodiment of a system according to the invention; and
Figure 2 is a circuit diagram of a second embodiment of the system according to the invention.

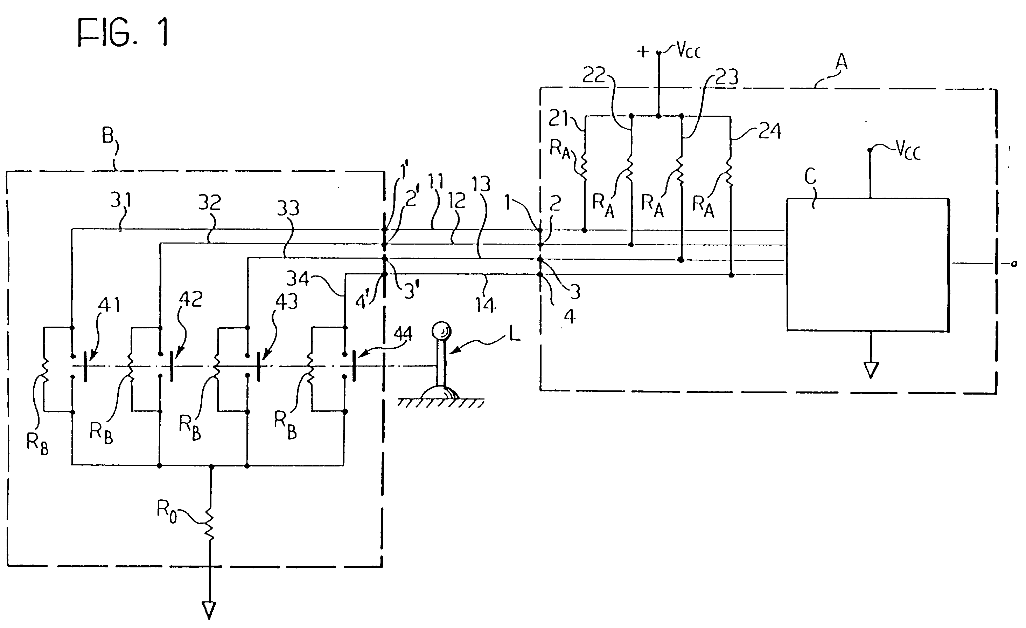

In Figure 1 a manually operable control member is indicated L, which may be constituted, for example, by the control lever of a servo-assisted gearbox for a motor vehicle.

The control member L can assume a plurality of discrete predetermined working positions. This member can, for example, assume five predetermined working positions such as:
- an "up" position in which it causes change to a higher gear ratio;
- a "down" position in which it causes change to a lower gear ratio;
- a "dead point" position in which it is arranged to allow the selection of reverse gear;
- a "reverse" position in which it causes engagement of reverse gear; and
- a "neutral" position.

This number of positions, as well as the above-indicated functions performed in each position, are purely exemplary.

The lever L has associated with it a system for detecting its position.

This system essentially comprises an electronic supply and decoder unit A which has a plurality of inputs 1 to 4 connected by respective connecting conductors 11 to 14 to corresponding outputs 1' to 4' of a position signal generator circuit generally indicated B.

The unit A includes a plurality of first circuit branches 21 to 24 connected between a respective terminal 1 to 4 and the positive pole of a DC voltage source Vcc. These circuit branches include respective resistors R_{A} having the same resistance value.

The terminals 1 to 4 of the unit A are connected to corresponding inputs of a comparison and decoder circuit C the function of which will be explained hereinbelow.

The position signal generator circuit B includes a plurality of circuit branches 31 to 34 connected between a respective output 1' to 4' and ground, which is connected to the other pole of the voltage source Vcc. Each circuit branch 31 to 34 includes a respective switch 41 to 44 the open/closed condition of which is controlled by the control member L. In particular the arrangement is of the type such that each working position of the member L corresponds to a predetermined pair of switches 41 to 44 being simultaneously closed. One particular position of the member L can correspond to the condition of all the switches 41 to 44 being simultaneously open.

With reference to the five working positions previously indicated by way of example, the mechanical coupling between the lever member L and the switches 41 and 44 can (in a known way) be achieved in such a way as to put into practice the correspondences defined in the following table:

| Position of "L" | Switches | | | |
|---|---|---|---|---|
| | 41 | 42 | 43 | 44 |
| "up" | closed | closed | open | open |
| "down" | open | closed | closed | open |
| "dead point" | open | closed | open | closed |
| "reverse" | open | open | closed | closed |
| "neutral" | open | open | open | open |

In parallel to the switches 41 to 44 are connected respective by-pass resistors R_{B} having substantially the same resistance values.

In the embodiment illustrated in Figure 1 a single resistor R₀ is interposed between the circuit branches 31 to 34 and ground.

By way of example the resistors R_{A} and the resistors R_{B} can each have a resistance value of about 2 Kohms, whilst the resistor R₀ can have a resistance value of about 0.5 Kohms.

The supply voltage Vcc can for example be about 5V.

In normal operation each of the above-defined positions of the control lever L corresponds to particular values of the voltages present at the terminals 1 to 4 of the supply and decoder unit A. These voltages are compared with predetermined reference values or fields in the comparison and decoder circuit C, which provides electrical output signals indicative of the corresponding position assumed by the lever.

The presence of the by-pass resistors R_{B} and the intrinsic redundancy inherent in the type of correspondence established between the positions of the lever L and the open/closed conditions of the switches 41 to 44 allows the system of Figure 1 correctly to determine the working position assumed by the lever L even when operating anomalies or breakdowns occur such as the interruption of a connection conductor between the unit A and the circuit B, short circuit to earth of one of the conductors or the failure of a switch of circuit B to close.

As can easily be established by simple calculations, upon the occurrence of such an operating anomaly the voltages at the terminals 1 to 4 of the unit A assume different values from those which would happen in the absence of such anomaly. However such voltages are still unequivocally indicative of the instantaneous position of the lever and, by suitable pre-definition of the threshold or range of comparison voltages, the circuit C is still able to recognise this position of the lever. Furthermore, by analysing the voltages at the terminals 1 to 4 the circuit C is also able to determine (and to indicate) the nature and location of the anomaly or breakdown which has occurred.

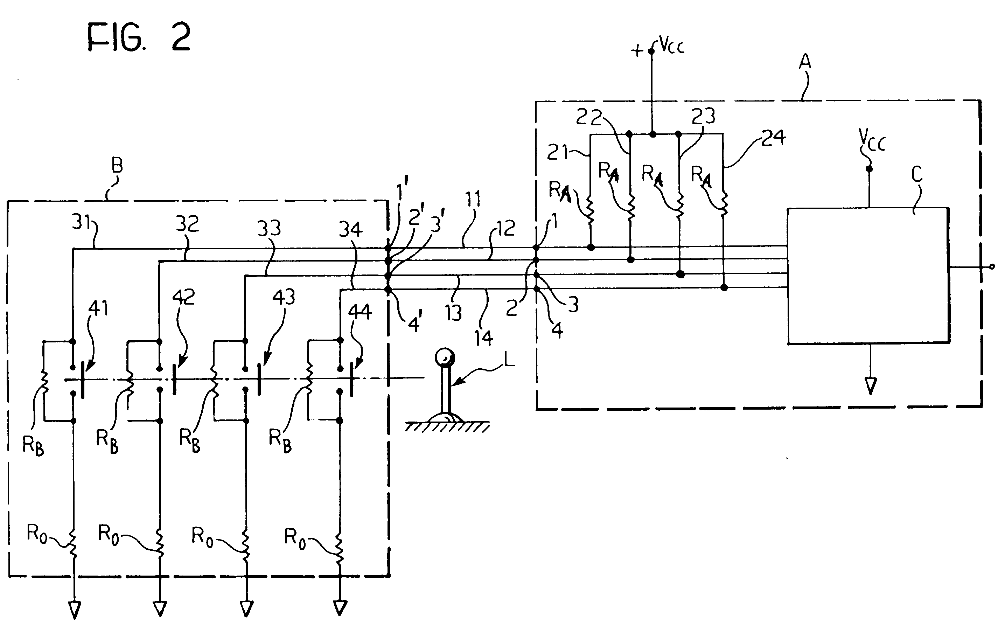

In the embodiment illustrated in Figure 2 the elements which have already been described are indicated with the same alphanumeric references.

The arrangement illustrated in Figure 2 differs from that shown in Figure 1 essentially by the fact that between the circuit branches 31 to 34 and ground are interposed respective resistors R₀. Consequently four circuit routes are formed which are independent of one another, each of which comprises one of the circuit branches 21 to 24, one of the connection conductors 11 to 14 and one of the circuit branches 31 to 34.

In this case, too, in normal operation each of the terminals 1 to 4 of the unit A goes to a relatively higher voltage when the switch of the associated circuit branch is open, and a relatively lower voltage when this switch is closed.

If, in operation, one of the above indicated anomalies or breakdowns occurs in one of the said circuit paths, the voltage at the corresponding terminal of the unit A still assumes a different value. In particular, if one of the connection conductors 11 to 14 is interrupted the voltage at the corresponding input terminal of the unit A goes substantially to the value Vcc (assuming that the corresponding input impedance of the circuit C is extremely high).

If, on the other hand, one of the connection conductors 11 to 14 is short circuited to earth, the voltage at the corresponding input terminal of the unit A goes substantially to zero.

As opposed to the arrangement illustrated in Figure 1, when an anomaly or breakdown of the said type occurs in the circuit of Figure 2 only the voltage at the input terminal of the unit A varies, which corresponds to the circuit path in which the anomaly or breakdown has occurred, whilst the voltages at the other terminals of the unit A are not altered.

Therefore, the variant of Figure 2, which although having the disadvantage of requiring the adoption of a plurality of resistors R₀, has the advantage of a simplification of the circuit C necessary for the comparison and decoding of the voltages present at the inputs of the unit A.

## Claims

1. A system for detecting the position of a manually operable control member (L), particularly for detecting the position of the control lever of a servo-assisted gearbox for a motor vehicle, comprising
a supply and decoder unit (A) having a plurality of terminals (1-4) and a corresponding plurality of first circuit branches (21-24) connected between a respective terminal (1-4) of the unit (A) and a first pole of a voltage source (Vcc) and including respective resistors (R_{A}); and
position signal generator means (B) associated with the said control member (L) and having a plurality of ordered outputs (1'-4') connected to the terminals (1-4) of the said unit (A) by respective connection conductors (11-14);
the arrangement being such that the voltages present in operation at the terminals (1-4) of the said unit (A) allow discrimination of the instantaneous position of the control member (L);
the said system being characterised in that:
the said position signal generator means (B) include a plurality of second circuit branches (31-34) each of which is connected between a respective output (1'-4') and the second pole of the said voltage source (Vcc) and include a switch (41-44) the open/closed condition of which is controlled by the said control member (L); predetermined positions of the said control member (L) corresponding to predetermined pairs of switches (41-44) being simultaneously closed;
respective by-pass resistors (R_{B}) being connected in parallel to the said switches (41-44); and
at least one further resistor (R₀) being interposed between the said by-pass resistors (R_{B}) and the second terminal of the voltage source (Vcc).

2. A system according to claim 1, characterised in that the said resistors (R_{A}) have the same resistance.

3. A system according to claims 1 or 2, characterised in that the said by-pass resistors (R_{B}) have the same resistance.

4. A system according to any preceding claim, characterized in that a single further resistor (R₀) is disposed between the said by-pass resistors (R_{B}) and the second pole of the voltage source (Vcc).

5. A system according to any one of the preceding claims 1-3, characterised in that respective further resistors (R₀) are disposed between the said by-pass resistors (R_{B}) and the second pole of the voltage source (Vcc).

6. A system according to Claim 5, characterised in that the said further resistors (R₀) have the same resistance.

7. A system according to any preceding claim in which the said switches (41 - 44) are associated with the said control member (L) in such a way that a predetermined position of the said member (L) corresponds to the simultaneous open condition of all the said switches (41 - 44).

8. A system according to any preceding claim, characterised in that the supply and decoder unit (A) and the said position signal generator means (B) comprise four respective circuit branches (21 - 24; 31 - 34) interconnected by four connection conductors (11 - 14) to allow the detection of at least five different positions of the said control member (L).

## Patentansprüche

1. System zur Ermittlung der Position eines manuell bedienbaren Steuerbauteils (L), insbesonders zur Ermittlung der Position des Schalthebels eines servounterstützten Schaltgetriebes für ein Kraftfahrzeug, das umfaßt
ein Speise- und Dekodiergerät (A), das eine Mehrzahl von Anschlüssen (1-4) und eine entsprechende Anzahl an ersten Schaltungszweigen (21-24), die zwischen einem jeweiligen Anschluß (1-4) des Gerätes (A) und einem ersten Pol einer Spannungsquelle (Vcc) geschalten sind und entsprechende Widerstände (R_{A}) aufweist; und
Positionssignalgeneratormittel (B), die mit dem genannten Steuerbauteil (L) verbunden sind und eine Anzahl geordneter Ausgänge (1'-4') aufweisen, die mit den Anschlüssen (1-4) des genannten Gerätes (A) mittels entsprechender Verbindungsleitungen (11-14) verbunden sind;
die Anordnung, die von der Art ist, daß die während des Betriebes vorhandenen Spannungen an den Anschlüssen (1-4) des genannten Gerätes (A) eine Unterscheidung der augenblicklichen Position des Steuerbauteils (L) ermöglichen; wobei das genannte System **dadurch gekennzeichnet** ist, daß
die genannten Positionssignalgeneratormittel (B) eine Anzahl an zweiten Schaltungszweigen (31-34), jeder zwischen einem jeweiligen Ausgang (1'-4') und dem zweiten Pol der genannten Spannungsquelle (Vcc) geschalten und einen Schalter (41-44), dessen offen/geschlossen Zustand durch den genannten Steuerbauteil (L) gesteuert wird, umfassen; vorbestimmte Positionen des genannten Steuerbauteils (L) entsprechend den vorbestimmten paar Schaltern (41-44), die gleichzeitig geschlossen werden;
entsprechende Umgehungswiderstände (R_{B}) parallel zu den genannten Schaltern (41-44) geschalten sind; und
mindestens ein weiterer Widerstand (R₀) zwischen den genannten Umgehungswiderständen (R_{B}) und dem zweiten Anschluß der Spannungsquelle (Vcc) zwischengeschaltet ist.

2. System nach Anspruch 1, **dadurch gekennzeichnet**, daß die genannten Widerstände (R_{A}) den gleichen Widerstand haben.

3. System nach Anspruch 1 oder 2, **dadurch gekennzeichnet**, daß die genannten Widerstände (R_{B}) den gleichen Widerstand haben.

4. System nach jedem der vorhergehenden Ansprüche, **dadurch gekennzeichnet**, daß ein einzelner weiterer Widerstand (R₀) zwischen den genannten Umgehungswiderständen (R_{B}) und dem zweiten Pol der Spannungsquelle (Vcc) geschalten ist.

5. System nach jedem der vorhergehenden Ansprüche 1 bis 3, **dadurch gekennzeichnet**, daß entsprechende weitere Widerstände (R₀) zwischen den genannten Umgehungswiderständen (R_{B}) und dem zweiten Pol der Spannungsquelle (Vcc) geschalten sind.

6. System nach Anspruch 5, **dadurch gekennzeichnet**, daß die genannten weiteren Widerstände (R₀) den gleichen Widerstand haben.

7. System nach jedem der vorhergehenden Ansprüche, in dem die genannten Schalter (41-44) mit dem genannten Schalthebel (L) in einer Art und Weise verbunden sind, sodaß eine vorbestimmte Position des genannten Schalthebels (L) einem gleichzeitig geöffneten Zustand aller genannter Schalter (41-44) entspricht.

8. System nach jedem der vorhergehenden Ansprüche, **dadurch gekennzeichnet**, daß das Speise- und Dekodiergerät (A) und die genannten Positionssignalgeneratormittel (B) vier entsprechende Schaltungszweige (21-24; 31-34) umfassen, die mittels Verbindungsleitungen (11-14) verbunden sind, um die Ermittlung zumindest fünf unterschiedlicher Positionen des genannten Schalthebels (L) zu ermöglichen.

## Revendications

1. Système de détection de la position d'un élément de commande manuel (L), plus particulièrement de détection de la position du levier de commande d'une boîte de vitesse assistée pour un véhicule à moteur, comprenant :
une unité de décodage et d'alimentation (A) ayant une pluralité de bornes (1 à 4) et une pluralité correspondante de premières dérivations (21 à 24) de circuit connectées entre une borne respective (1 à 4) de l'unité (A) et un premier pôle d'une source de tension (Vcc) et comportant les résistances (R_{A}) respectives ; et
un moyen générateur de signal de position (B) associé audit élément de commande (L) et ayant une pluralité de sorties ordonnées (1' à 4') connectées aux bornes (1 à 4) de ladite unité (A) grâce à des conducteurs de connexion respectifs (11 à 14) ;
l'agencement étant tel que les tensions présentes au cours du fonctionnement aux bornes (1 à 4) de ladite unité (A) permettent une discrimination de la position instantanée de l'élément de commande (L) ;
ledit système étant caractérisé en ce que :
ledit moyen générateur de signal de position (B) comporte une pluralité de secondes dérivations (31 à 34) de circuit, dont chacune est connectée entre une sortie respective (1' à 4') et le second pôle de ladite source de tension (Vcc) et comporte un commutateur (41 à 44) dont l'état ouvert/fermé est commandé par ledit élément de commande (L) ; des positions prédéterminées dudit élément de commande (L) correspondant à la fermeture simultanée des paires de commutateurs (41 à 44) prédéterminées ;
des résistances de dérivation (R_{B}) respectives sont connectées, en parallèle, auxdits commutateurs (41 à 44) ; et
au moins une autre résistance (R_{O}) est interposée entre lesdites résistances de dérivation (R_{B}) et la seconde borne de la source de tension (Vcc).

2. Système selon la revendication 1, caractérisé en ce que lesdites résistances (R_{A}) présentent la même résistance.

3. Système selon les revendications 1 ou 2, caractérisé en ce que lesdites résistances de dérivation (R_{B}) présentent la même résistance.

4. Système selon l'une quelconque des revendications précédentes, caractérisé en ce qu'une seule autre résistance (R_{O}) est disposée entre lesdites résistances de dérivation (R_{B}) et le second pôle de la source de tension (Vcc).

5. Système selon l'une quelconque des revendications précédentes 1 à 3 , caractérisé en ce que d'autres résistances respectives (R_{O}) sont disposées entre lesdites résistances de dérivation (R_{B}) et le second pôle de la source de tension (Vcc).

6. Système selon la revendication 5, caractérisé en ce que lesdites autres résistances (R_{O}) présentent la même résistance.

7. Système selon l'une quelconque des revendications précédentes, dans lequel lesdits commutateurs (41 à 44) sont associés audit élément de commande (L) de telle façon qu'une position prédéterminée dudit élément (L) correspond à l'état ouvert simultané de tous lesdits commutateurs (41 à 44).

8. Système selon l'une quelconque des revendications précédentes, caractérisé en ce que l'unité de décodage et d'alimentation (A) et ledit moyen générateur de signal de position (B) comprennent quatre dérivations (21 à 24 ; 31 à 34) de circuit respectives connectées entre elles par quatre conducteurs de connexion (11 à 14) afin de permettre la détection d'au moins cinq positions différentes dudit élément de commande (L).
